# EUROPEAN PATENT APPLICATION

(11) **EP 2 369 156 A2**
(43) Date of publication of application: **28.09.2011**
(21) Application number: 11159016.2
(22) Date of filing: 21.03.2011
(51) Int. Cl.: F02C 7/18

(54) **System and method for cooling gas turbine components**

(30) Priority: 23.03.2010 US 729745
(71) Applicant: General Electric Company, Schenectady, NY 12345 (US)
(72) Inventor: Muthuramalingham, Mahendhra, Whitefield Road 560066, Bangalore (IN); Anand, Ashok Kumar, Schenectady, NY 12345 (US); Muthaiah, Veerappan, Whitefield Road 560066, Bangalore (IN)
(74) Representative: Gray, Thomas

(57) **Abstract**

A system for cooling components of a turbine (16, 64) includes: at least one input in fluid communication with a source of carbon dioxide gas, the carbon dioxide gas removed from synthesis gas produced by a gasification unit (32) from hydrocarbon fuel; and at least one first conduit (62, 69) in fluid communication with the at least one input and configured to divert a portion of the carbon dioxide gas from the source of carbon dioxide gas to at least one component of the turbine (16), the turbine (16) configured to combust the synthesis gas.

## Description

### BACKGROUND OF THE INVENTION

The subject matter disclosed herein relates to gas turbines and, more particularly, to cooling mechanisms in gas turbines.

Integrated Gasification Combined Cycle (IGCC) systems are increasingly being utilized for power generation. IGCC uses a gasification process to produce synthesis gas (syngas) from fuel sources such as coal, heavy petroleum residues, biomass and others. The syngas is used as a fuel in gas turbines for producing electricity. IGCC systems can be advantageous in reducing carbon dioxide (CO₂) emissions through mechanisms such as pre-combustion carbon capture.

IGCC power plants adopt pre-combustion systems for CO₂ capture. Currently, the capture of CO₂ from IGCC plants penalizes the performance of such plants, particularly in production output and efficiency. In addition, cooling of the stationary and rotating components of a gas turbines by the conventional method of extracting air from the turbine's compressor reduces turbine efficiency by, for example, reducing the Brayton cycle efficiency. This loss of efficiency is manifested due to factors such as reduction in firing temperatures due to non-chargeable flow diluting the combustor exit temperature, reduction in work on account of bypassing compressed air at upstream stages of the turbine, and reduction in work potential on account of dilution effects of the coolant stream mixing in the main gas path and the associated loss of aerodynamic efficiency.

### BRIEF DESCRIPTION OF THE INVENTION

According to one aspect of the invention, a system for cooling components of a turbine includes: at least one input in fluid communication with a source of carbon dioxide gas, the carbon dioxide gas removed from synthesis gas produced by a gasification unit from hydrocarbon fuel; and at least one first conduit in fluid communication with the at least one input and configured to divert a portion of the carbon dioxide gas from the source of carbon dioxide gas to at least one component of the turbine, the turbine configured to combust the synthesis gas.

According to another aspect of the invention, a system for power generation includes: a gasification unit configured to produce raw synthesis gas from an input fuel; an acid gas removal plant in fluid communication with the gasification unit, the acid gas removal plant configured to remove acid gas from the raw synthesis gas and produce clean synthesis gas, the acid gas including carbon dioxide gas; a gas turbine configured to combust the clean sythensis gas; and a cooling unit in fluid communication with the acid gas removal plant and configured to divert at least a portion of the carbon dioxide gas to at least one component of a gas turbine.

According to yet another aspect of the invention, a method of cooling components of a turbine includes: extracting carbon dioxide gas from a synthesis gas produced by a gasification process; advancing the carbon dioxide gas to a storage system; and diverting a portion of the carbon dioxide gas to the turbine to cool at least one component of the turbine.

These and other advantages and features will become more apparent from the following description taken in conjunction with the drawings.

### BRIEF DESCRIPTION OF THE DRAWING

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a cross-sectional view of an exemplary gas turbine;
FIG 2 is a block diagram of an exemplary Integrated Gasification Combined Cycle (IGCC) power plant with CO₂ capture;
FIG. 3 is a diagram of an exemplary gas turbine cooling system for use in the IGCC power plant of FIG. 2;
FIG. 4 is a diagram of an exemplary gas turbine cooling system for use in the IGCC power plant of FIG. 2; and
FIG. 5 is an exemplary method of cooling a gas turbine.

The detailed description explains embodiments of the invention, together with advantages and features, by way of example with reference to the drawings.

### DETAILED DESCRIPTION OF THE INVENTION

There is provided a system and method for improving the output and efficiency of turbine systems that utilize gasification to supply turbine combustion fuel. An exemplary turbine systems include integrated gasification combined cycle (IGCC) power generation systems. In one embodiment, the systems and method are utilized in conjunction with IGCC or other turbine systems that incorporate pre-combustion systems for carbon dioxide (CO₂) capture. Exemplary systems and methods include cooling turbines using CO₂ captured by a power generation and/or CO₂ removal system. Exemplary systems and methods utilize captured CO₂ as cooling media for cooling of stationary and/or rotating components of turbines, such as gas turbines, in a closed loop cooling scheme.

In one embodiment, the systems and method include utilizing a synthesis gas cleaning solvent or other fluid that is available in sythesis gas cleaning systems, CO₂ removal systems and/or power plants such as IGCC plants. The solvents are enabled to capture CO₂ from turbine fuel produced by gasification, which are utilized by the systems and methods described herein for turbine cooling.

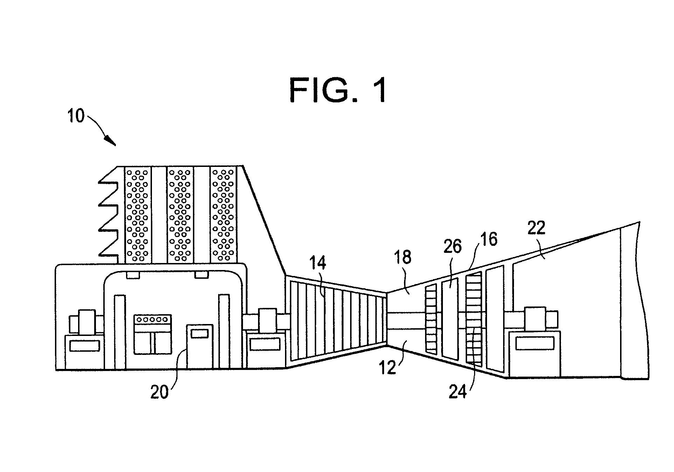

With reference to FIG. 1, a gas turbine assembly constructed in accordance with an exemplary embodiment of the invention is indicated generally at 10. The assembly 10 includes a rotor 12 attached to a compressor 14 and a power turbine 16. A combustion chamber 18 is in fluid communication with both the compressor 14 and the power turbine 16, and acts to ignite a fuel and air mixture to cause rotation of the power turbine 16 and the rotor 12. Rotation of the rotor 12 in turn powers, for example, a generator 20. Exhaust gas 22 is exhausted from the power turbine 16. In one embodiment, at least a portion of the exhaust gas 22 is guided to a heat recovery steam generator (HRSG) that recovers heat from the hot exhaust gas 22 and produces steam that is usable in, for example, a steam turbine in an electrical generation system.

The turbine includes various internal components that are exposed to elevated temperatures during operation of the turbine assembly 10. Such components include a rotor shaft and rotor disks that rotate about a central axis. Exemplary components also include rotating components 24 such as blades or buckets, which can be removably attached to an outer periphery of each rotor disk. Other components include stationary components 26 such as stator vanes or nozzles.

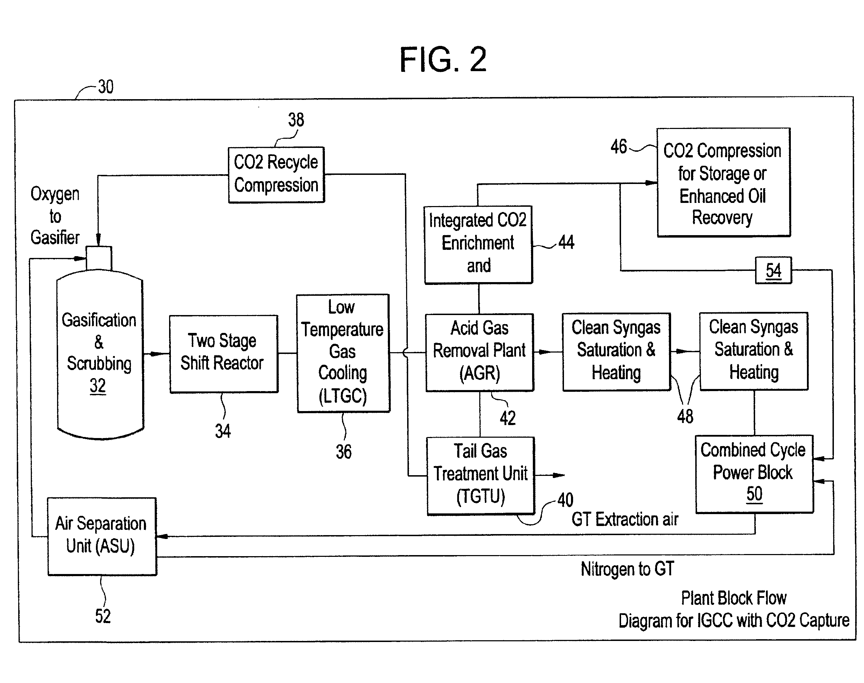

In one embodiment, referring to FIG. 2, an IGCC power generation plant 30 is shown. One or more fuels such as coal or other hydrocarbon fuels, petroleum residues and biomass are fed into a gasification and scrubbing unit 32 in which the fuel undergoes a reduction reaction and synthesis gas ("syngas"), a mixture of primarily carbon monoxide (CO) and hydrogen, is produced. The raw syngas may be cooled via, for example, a radiant syngas cooler and/or a low temperature gas cooling (LTGC) system 36.

In one embodiment, the combustion chamber 18, or other suitable equipment, is utilized in an oxyfuel cycle. Oxyfuel cycles generally include the combustion of fuel with pure oxygen, in place of air. In one embodiment, oxyfuel includes an oxygen enriched gas mixture diluted with combustion gas such as gas turbine exhaust (i.e., flue gas consisting mostly of CO₂ and H₂O).

The gases, in one embodiment, are advanced into a two stage shift reactor 34 in which water vapor is used to convert the CO into carbon dioxide (CO₂). At this stage, the syngas is only a raw syngas that includes acid gases, which include various contaminants such as CO₂ and hydrogen sulphide (H₂S). Various other gases are also produced in the gasification process, and present in the syngas, such as nitrogen, carbon mon-oxide, and others.

An acid gas removal (AGR) plant 42 then receives the raw syngas. The AGR plant 42 processes the raw syngas to remove H₂S, which can be sent to a tail gas treatment unit (TGTU) 40, and CO₂ from the raw syngas. The AGR plant 42 includes, for example, an absorber in which a solvent absorbs H₂S and CO₂ from the raw syngas to produce a "sweetened" or clean syngas. An example of a suitable solvent is Selexol^{™} (Union Carbide Corporation), although any solvent capable of removing acid gases from a gas mixture may be used. In addition to solvent-based processes, the AGR plant 42 may use any suitable process for sweetening the syngas. Examples of such sweetening processes include selective gas removal processes such as the utilization of CO₂ and H₂S selective membranes, warm sulphur removal technologies and others.

In one embodiment, after the syngas is cleaned, the solvent includes concentrations of H₂S and CO₂ and may be refered to as a "rich" solvent. The rich solvent is fed into one or more regenerators (including, for example, a stripper and boiler) in which the H₂S and CO2 are stripped from the solvent, resulting in a "lean" solvent. The lean solvent can be recycled for use in subsequent acid gas removal operations.

In one embodiment, the removed CO₂ is advanced through, for example, an Integrated CO2 Enrichment system 44, and sent to a compression and/or storage unit 46 for CO2 capture and/or enhanced oil recovery. A portion of the CO₂, in one embodiment, is diverted via a recycling/compression system 38 and directed back into the gasification unit 32. In addition, the TGTU 40 may be used to remove sulphur from the raw syngas.

The clean syngas is then advanced through various saturation and heating systems 48 and fed into a combined cycle power block 50 for power generation. The power block 50 includes a gas turbine such as the gas turbine assembly 10 and may also include a steam turbine for producing energy from the gas turbine exhaust gases.

In one embodiment, the IGCC plant 30 includes an air separation unit (ASU) 52. Air can be diverted from the gas turbine compressor and fed into the ASU 52. The ASU 52 separates oxygen from the air that can be fed into the gasification unit 32, and also produces nitrogen, which can be diverted back to the turbine for cooling.

In one embodiment, a portion of the CO₂ at a suitable pressure is extracted from the CO₂ removal system and diverted to the power block 50 to cool the gas turbine stationary or rotating components in a closed loop system wherein the heat picked up by CO₂ is recovered. The CO₂ is diverted to the gas turbine via any suitable cooling system 54. In one embodiment, the cooling system 54, the combined cycle power block 50 and/or the IGCC power plant 30 includes one ore more heat exchangers to regenerate thermal energy from the CO2 that has been heated as a result of applying the CO₂ to the gas turbine. The heat exchanges are configured to heat components such as the fuel and/or diluent stream entering the gas turbine, the steam turbine, as well as any other desired fluids such as boiler fluids. After the CO₂ is applied to the gas turbine and/or the steam turbine, and any additional components, it may be subsequently sent to the compression and/or storage system 46, where the CO₂ is compressed to a selected pressure, such as 2000psig (~140 bars), a typical pressure to supply liquid CO₂ for Enhanced Oil Recovery (EOR) applications.

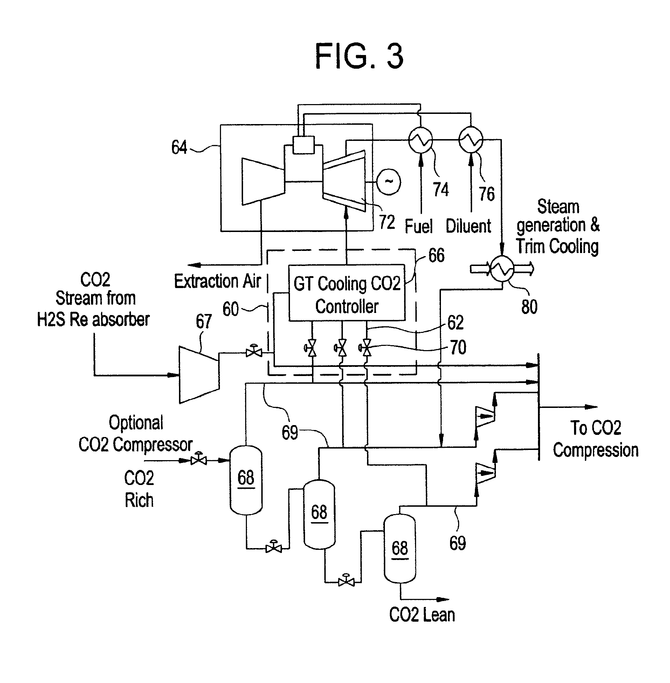

Referring to FIG. 3, one embodiment of a cooling system 60 is incorporated into a gas turbine system that utilizes CO₂ removal and/or capture. The cooling system 60 includes one or more conduits 62 or other mechanisms for applying CO₂ to various components of a gas turbine 64. The cooling system 60 also includes, in one embodiment, a gas turbine cooling CO₂ controller 66 that includes processors, memory, transmission devices and/or displays suitable for controlling the operation of the cooling system 60 as well as receiving, processing, displaying and/or transmitting information regarding the cooling system 60.

In one embodiment, the cooling system 60 is in operable communication with the gas turbine 64 and a portion of the AGR plant 42. The AGR plant 42 includes one or more flash tanks 68 that separate CO₂ from a rich solvent. Gas conduits 69 are configured to route the separated CO₂ from the flash tanks 68 to desired locations, such as the compression and/or storage unit 46. In one embodiment, CO₂ fluid from a H₂S reabsorber 67 is routed to the gas turbine cooling CO₂ controller 66. The cooling system conduits 62 are in fluid communication with respective gas conduits 69 to divert a portion of the separated CO₂ into the cooling system 60. The flow of CO₂ into the cooling system can be controlled by the controller 66. In one embodiment, the cooling system 60 include valves 70 for controlling the flow of CO₂ from the gas conduits 69, through the cooling system 60 and into the gas turbine 64. The valves 70 may be selectively operated via, for example, the controller 66.

The cooling system 60, in one embodiment, is a closed loop system. For example, as shown in FIG. 3, CO₂ gas is flowed from the cooling system 60 into selected turbine stages, such as a power turbine stage 72, and is directed to selected moving and/or stationary components. The CO₂ absorbs heat from the components, and the heated CO₂ may be fed through a fuel line heat exchanger 74 and a diluent line heat exchanger 76 to heat fuel and diluent being fed into the turbine's combustion chamber 78. The CO₂ continues on to at least one additional heat exchanger 80 to heat exhaust gases used in steam generation and trim cooling, before it is returned to one or more of the gas conduits 68 and/or a CO₂ storage system.

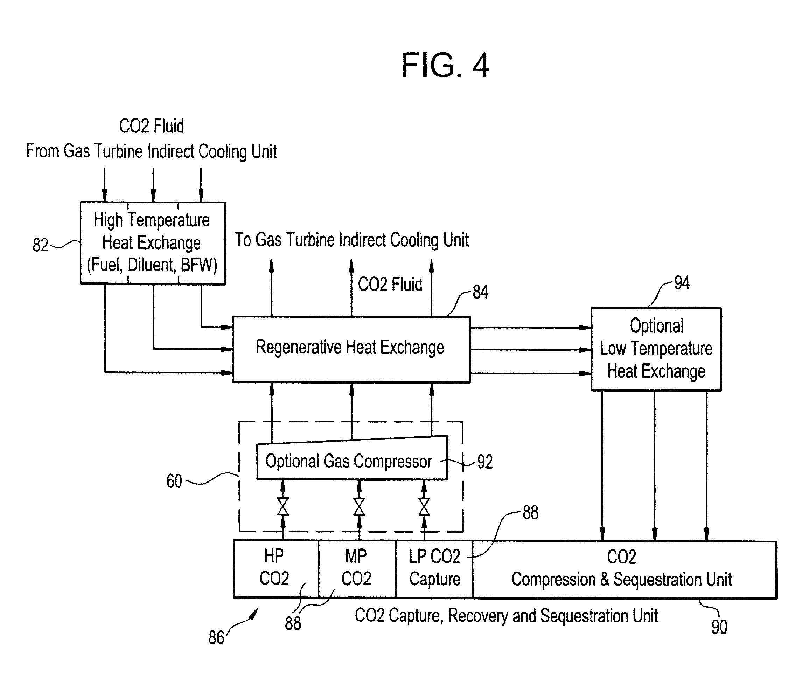

Another embodiment of the cooling system 60 is shown in reference to FIG. 4. The cooling system 60 in this embodiment is configured to communicate with an indirect cooling unit (ICU). The ICU defines the closed loop cooling of turbine components. CO₂ fluid from the ICU is routed to heat exchangers (e.g, air-fluid heat exchanger, fluid-fuel heat exchanger, heat sinks, regenerative heat exchanger) and it is returned to the CO₂ compression and sequestration unit 90.

In this embodiment, CO₂ fluid from the ICU is fed to heat exchangers 82 that are configured to transfer heat from the bleed CO₂ to fluids such as the fuel, diluent, compressor discharge air and/or boiler feed water (BFW). Further heat is transferred back to the CO₂ which is entering ICU through a regenerative heat exchanger system 84. CO₂ fluid can also be cooled through optional low temperature heat exchange systems 94 (e.g., trim coolers, other areas of steam heat exchangers and others) that further cool the CO₂ to facilitate compression, liquefication and/or sequestration. Lastly, the cooled CO₂ is diverted to the compression and sequestration unit 90.

In one embodiment, the cooling system 60 is in fluid communication with a CO₂ capture, recovery and sequestration system 86. The CO₂ capture unit includes a number of capture modules 88. Exemplary capture modules include flash tanks 68 which through which rich solvent is passed. The capture modules 88 can include high pressure (HP), medium pressure (MP) and/or low pressure (LP) modules 88 in fluid communication with a CO₂ compression and sequestration unit 90.

In use, a portion of the CO₂ from capture modules 88 may be diverted through an optional gas compression system 92 through regenerative heat exchangers 84 to selected ICU of turbine components.

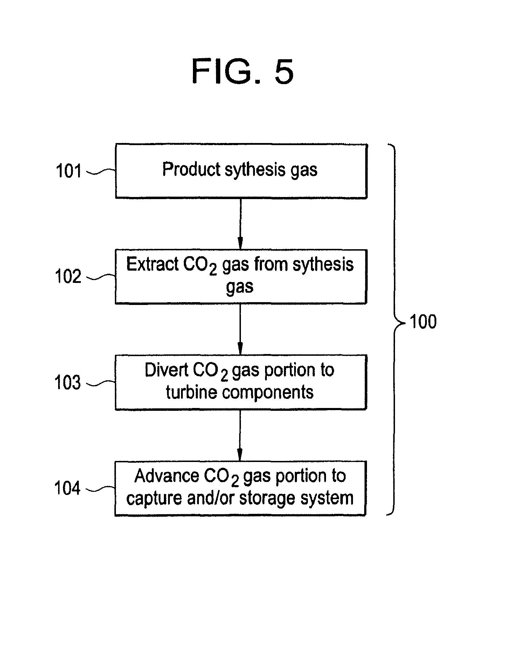

FIG. 5 illustrates a method 100 of cooling components of a turbine. The method 100 includes one or more stages 101-104. Although the method 100 is described in conjunction with the IGCC power plant 30 and the cooling system 60, the method 100 may be used with any system capable of cooling a turbine assembly as described herein. In one embodiment, the method 100 includes the execution of all of stages 101-104 in the order described. However, certain stages may be omitted, stages may be added, or the order of the stages changed.

In the first stage 101, fuel is flowed into a gasification system such as the gasification and scrubbing unit 32 and raw syngas is produced. The raw syngas is cleaned or sweetened by a suitable cleaning system such as the AGR plant 42 to remove acid gases from the raw syngas.

In the second stage 102, CO₂ gas is extracted from the raw syngas and/or from byproducts of cleaning the raw syngas. For example, CO₂ gas is removed from a solvent used to clean the raw syngas by the flash tanks 68 or other CO₂ extraction mechanisms. The CO₂ gas is advanced to a CO₂ capture and/or storage system, such as the compression and/or storage unit 46.

In the third stage 103, a portion of the CO₂ gas is diverted to a cooling system such as the cooling system 60 that applies the CO₂ gas portion to selected components of a turbine such as a gas turbine. Exemplary components include rotating blades or buckets and stationary components such as stator vanes.

In the fourth stage 104, the CO₂ gas portion, which has been heated by the turbine components, is recovered in thermal energy / regenerated and then returned to the CO₂ capture and/or storage system. In one embodiment, the heated CO₂ gas portion is cooled and thermal energy is transferred to fuel, diluents and/or other components of a power generation system prior to returning the CO₂ gas portion to the CO₂ capture and/or storage system.

In one embodiment, the CO₂ gas portion is cooled by transferring thermal energy from the CO₂ gas portion to an indirect cooling unit by a suitable heat exchange mechanism such as the regenerative heat exchanger 84.

Although the systems and methods described herein are provided in conjunction with gas turbines, any other suitable type of turbine may be used. For example, the systems and methods described herein may be used with a steam turbine or turbine including both gas and steam generation.

The systems and methods described herein may be utilized in conjunction with any of various turbine power generation systems, and are not limited to the specific power generation systems described herein. In addition, the systems and methods described herein may be utilized in place of or in addition to various other cooling systems. Examples of such cooling systems include closed loop systems using cooling media for hot gas path components such as steam, nitrogen and liquid (e.g., water) coolants.

The devices, systems and methods described herein provide numerous advantages over prior art systems. The devices, systems and methods provide the technical effect of increasing efficiency and performance of the turbine. For example, based on analyses of exemplary systems, systems and methods such as those described herein can improve output and efficiency, for example by improving net output by 14.5% and efficiency by 0.52 points over the baseline scenario that is practiced in the prior art.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

For completeness, various aspects of the invention are now set out in the following numbered clauses:
1. A system for cooling components of a turbine, comprising:
   at least one input in fluid communication with a source of carbon dioxide gas, the carbon dioxide gas removed from synthesis gas produced by a gasification unit from a fuel; and
   at least one first conduit in fluid communication with the at least one input and configured to divert a portion of the carbon dioxide gas from the source of carbon dioxide gas to at least one component of the turbine, the turbine configured to combust the synthesis gas.
2. The system of clause 1, wherein the source of carbon dioxide gas is from an acid gas removal plant in fluid communication with the gasification unit, the acid gas removal plant configured to remove acid gases from the synthesis gas, the acid gases including carbon dioxide gas.
3. The system of clause 2, wherein the acid gas removal plant is configured to apply a solvent to the synthesis gas, the solvent configured to extract the acid gases from the synthesis gas and retain the acid gases therein.
4. The system of clause 3, wherein the source of carbon dioxide gas includes at least one of: a gasification unit, an oxyfuel cycle and a flash tank configured to remove the carbon dioxide gas from the solvent.
5. The system of clause 1, further comprising a second conduit configured to receive the portion of the carbon dioxide gas after the portion has been diverted to the at least one component, the second conduit in fluid communication with at least one carbon dioxide storage unit.
6. The system of clause 5, further comprising at least one heat exchanger in fluid communication with the second conduit and configured to transfer thermal energy from the portion of the carbon dioxide gas to at least one component of a power generation system including the turbine.
7. The system of clause 6, wherein the at least one component of the power generation system includes at least one of an indirect turbine cooling unit, a closed loop, a turbine fuel, a turbine diluent and a steam turbine.
8. A system for power generation, comprising:
   a gasification unit configured to produce raw synthesis gas from an input fuel;
   an acid gas removal plant in fluid communication with the gasification unit, the acid gas removal plant configured to remove acid gas from the raw synthesis gas and
   produce clean synthesis gas, the acid gas including carbon dioxide gas;
   a gas turbine configured to combust the clean synthesis gas; and
   a cooling unit in fluid communication with the acid gas removal plant and configured to divert at least a portion of the carbon dioxide gas to at least one component of a gas turbine.
9. The system of clause 8, further comprising a carbon dioxide storage unit in fluid communication with the acid gas removal plant.
10. The system of clause 9, further comprising a conduit in fluid communication with the at least one component and the storage unit, the conduit configured to advance the portion of the carbon dioxide gas to the storage unit after the portion has been diverted to the at least one component.
11. The system of clause 10, further comprising at least one heat exchanger in fluid communication with the conduit and configured to transfer thermal energy from the portion of the carbon dioxide gas to at least one component of the system.
12. The system of claim 8, further comprising an indirect cooling unit configured to cool the gas turbine, the indirect cooling unit in fluid communication with the portion of the carbon dioxide gas and configured to cool the portion of the carbon dioxide gas after the portion has been diverted to the at least one component.
13. A method of cooling components of a turbine, comprising:
   extracting carbon dioxide gas from a synthesis gas produced by a gasification process;
   advancing the carbon dioxide gas to a storage system; and
   diverting a portion of the carbon dioxide gas to the turbine to cool at least one component of the turbine.
14. The method of clause 13, wherein extracting the carbon dioxide gas includes applying a solvent to the synthesis gas, the solvent configured to extract acid gases from the synthesis gas and retain the acid gases therein.
15. The method of clause 14, wherein extracting the carbon dioxide gas includes removing the carbon dioxide gas from the solvent.
16. The method of clause 13, further comprising advancing the portion of the carbon dioxide gas from the turbine to the storage system after the portion has been diverted to the gas turbine.
17. The method of clause 16, wherein advancing the portion of the carbon dioxide gas includes cooling the portion of the carbon dioxide.
18. The method of clause 17, wherein cooling the portion of the carbon dioxide includes transferring thermal energy from the portion of the carbon dioxide gas to at least one component of a power generation system.
19. The method of clause 18, wherein the at least one component of the power generation system at least one of an indirect turbine cooling unit, a closed loop, a turbine fuel, a turbine diluent and a steam turbine.
20. The method of clause 13, wherein the turbine is a gas turbine.

## Claims

1. A system for cooling components of a turbine (16, 64), comprising:
at least one input in fluid communication with a source of carbon dioxide gas, the carbon dioxide gas removed from synthesis gas produced by a gasification unit (32) from a fuel; and
at least one first conduit (62, 69) in fluid communication with the at least one input and configured to divert a portion of the carbon dioxide gas from the source of carbon dioxide gas to at least one component of the turbine (16), the turbine configured to combust the synthesis gas.

2. The system of claim 1, wherein the source of carbon dioxide gas is from an acid gas removal (42) plant in fluid communication with the gasification unit (32), the acid gas removal (42) plant configured to remove acid gases from the synthesis gas, the acid gases including carbon dioxide gas.

3. The system of claim 2, wherein the acid gas removal plant (42) is configured to apply a solvent to the synthesis gas, the solvent configured to extract the acid gases from the synthesis gas and retain the acid gases therein.

4. The system of claim 3, wherein the source of carbon dioxide gas includes at least one of: a gasification unit (32), an oxyfuel cycle and a flash tank (68) configured to remove the carbon dioxide gas from the solvent.

5. The system of any of the preceding claims, further comprising a second conduit (62, 69) configured to receive the portion of the carbon dioxide gas after the portion has been diverted to the at least one component, the second conduit (62, 69) in fluid communication with at least one carbon dioxide storage unit.

6. The system of claim 5, further comprising at least one heat exchanger (74, 76) in fluid communication with the second conduit (62, 69) and configured to transfer thermal energy from the portion of the carbon dioxide gas to at least one component of a power generation system (30) including the turbine (16, 64).

7. The system of claim 6, wherein the at least one component of the power generation system (30) includes at least one of an indirect turbine cooling unit, a closed loop, a turbine fuel, a turbine diluent and a steam turbine.

8. A method of cooling components of a turbine, comprising:
extracting carbon dioxide gas from a synthesis gas produced by a gasification process;
advancing the carbon dioxide gas to a storage system; and
diverting a portion of the carbon dioxide gas to the turbine to cool at least one component of the turbine.

9. The method of claim 8, wherein extracting the carbon dioxide gas includes applying a solvent to the synthesis gas, the solvent configured to extract acid gases from the synthesis gas and retain the acid gases therein.

10. The method of claim 9, wherein extracting the carbon dioxide gas includes removing the carbon dioxide gas from the solvent.

11. The method of claim 8, further comprising advancing the portion of the carbon dioxide gas from the turbine to the storage system after the portion has been diverted to the gas turbine.

12. The method of claim 11, wherein advancing the portion of the carbon dioxide gas includes cooling the portion of the carbon dioxide.

13. The method of claim 12, wherein cooling the portion of the carbon dioxide includes transferring thermal energy from the portion of the carbon dioxide gas to at least one component of a power generation system.

14. The method of claim 13, wherein the at least one component of the power generation system at least one of an indirect turbine cooling unit, a closed loop, a turbine fuel, a turbine diluent and a steam turbine.

15. The method of claim 8, wherein the turbine is a gas turbine.
